# EUROPEAN PATENT APPLICATION

(11) **EP 4 671 179 A1**
(43) Date of publication of application: **31.12.2025**
(21) Application number: 25184577.2
(22) Date of filing: 23.06.2025
(51) Int. Cl.: B66B 1/34

(54) **PASSENGER CONVEYOR SYSTEM THAT MONITORS STATUS OF CONTROLLER OPERATING SYSTEM AND PUSHES UPDATES TO SAME**

(30) Priority: 26.06.2024 IN 202411049044
(71) Applicant: Otis Elevator Company, Farmington, Connecticut 06032 (US)
(72) Inventor: Konathala, Kiran Sundeep, 500081 Hyderabad, Telangana (IN); Pilla, Dinesh, 50081 Hyderabad, Telangana (IN); Ravichandran, Serralathan Sivasamy, 500081 Hyderabad, Telangana (IN); Atla, Naveen, 500081 Hyderabad, Telangana (IN); Madduluri, Sai Prakash, 500081 Hyderabad, Telangana (IN)
(74) Representative: Schmitt-Nilson Schraud Waibel Wohlfrom Patentanwälte Partnerschaft mbB

(57) **Abstract**

An passenger conveying system for confirming a status of an operating system of a device controller of a passenger conveyor, having: a maintenance system; a maintenance controller coupled to the device controller via a first network and to the maintenance system via a second network, wherein the maintenance controller is configured to: transmit a first signal to the device controller utilizing one or more of a plurality of protocols to identify the communication capabilities of the device controller; transmit a second signal including current parameters of the operating system to the maintenance system, upon receiving a responsive signal from the device controller, to determine the status of an operating system; and issue an alert to the maintenance system after failing to receive a responsive signal from the device controller.

## Description

The embodiments described herein relate to a passenger conveyor system, such as elevators, escalators, moving walkways, and other automated people movers and more specifically to a passenger conveyor system that monitors the status of a controller operating system and pushes updates to same.

With new installations of passenger conveyor systems, such as elevators, moving walkways and escalators, after a new software installation on device controllers, i.e., which control the conveyor, is complete, a mechanic may need to manually upload the configuration of the controller to a management service to enable the service to communicate with the controller. Significant time may be required for this action.

Disclosed is a passenger conveyor system for confirming a status of an operating system of a device controller of a passenger conveyor, including: a maintenance system; a maintenance controller coupled to the device controller via a first network and to the maintenance system via a second network, wherein the maintenance controller is configured to: transmit a first signal to the device controller utilizing one or more of a plurality of protocols to identify the communication capabilities of the device controller; transmit a second signal including current parameters of the operating system to the maintenance system, upon receiving a responsive signal from the device controller, to determine the status of an operating system; and issue an alert to the maintenance system after failing to receive a responsive signal from the device controller.

Particular embodiments further may include at least one, or a plurality of, the following optional features, alone or in combination with each other:

In addition to one or more aspects of the system or as an alternate the maintenance controller is configured to: transmit the first signal to the device controller utilizing a first protocol; and transmit the first signal to the device controller utilizing a second protocol after failing to receive the responsive signal from the device controller during a first period of time.

In addition to one or more aspects of the system or as an alternate the maintenance controller is configured to issue the alert after failing to receive the responsive signal after a second period of time.

In addition to one or more aspects of the system or as an alternate the maintenance system is configured to compare the current parameters of the operating system of the device controller to determine whether the operating system requires updating.

In addition to one or more aspects of the system or as an alternate upon determining that the operating system of the device controller requires updating, the maintenance system is configured to execute an updating protocol to update the current parameters of the device controller.

In addition to one or more aspects of the system or as an alternate the updating protocol includes the maintenance system instructing the maintenance controller to update the current parameters of the device controller.

In addition to one or more aspects of the system or as an alternate the updating protocol includes the maintenance system transmitting a third signal to the device controller including data representing updated parameters, and the device controller installing the updated parameters.

In addition to one or more aspects of the system or as an alternate the first protocol is a CAN protocol.

In addition to one or more aspects of the system or as an alternate the second protocol is a serial protocol.

In addition to one or more aspects of the system or as an alternate the maintenance system is a cloud service.

Disclosed is a method of confirming a status of an operating system of a device controller of a passenger conveyor, including: transmitting, by a maintenance controller, a first signal to the device controller via a first network utilizing one or more of a plurality of protocols to identify the communication capabilities the device controller; transmitting, by the maintenance controller, a second signal including current parameters of the operating system to a maintenance system via a second network after receiving a responsive signal from the device controller to determine the status of the operating system; and issuing, by the maintenance controller, an alert to the maintenance system after failing to receive a responsive signal from the device controller.

Particular embodiments further may include at least one, or a plurality of, the following optional features, alone or in combination with each other:

In addition to one or more aspects of the method or as an alternate, the method includes transmitting, by the maintenance controller, the first signal to the device controller utilizing a first protocol, and transmitting, by the maintenance controller, the first signal to the device controller utilizing a second protocol, after failing to receive the responsive signal from the device controller during a first period of time.

In addition to one or more aspects of the method or as an alternate, the method includes issuing, by the maintenance controller, the alert after failing to receive the responsive signal after a second period of time.

In addition to one or more aspects of the method or as an alternate, the method includes The method of claim 13, wherein the method includes comparing, by the maintenance system, the current parameters of the operating system of the device controller to determine whether the operating system requires updating.

In addition to one or more aspects of the method or as an alternate, the method includes executing, by the maintenance system, an updating protocol to update the current parameters of the device controller upon determining that the operating system of the device controller requires updating.

In addition to one or more aspects of the method or as an alternate, the updating protocol includes the maintenance system instructing the maintenance controller to update the current parameters of the device controller.

In addition to one or more aspects of the method or as an alternate, the updating protocol includes the maintenance system transmitting a third signal to the device controller including data representing updated parameters, and the device controller installing the updated parameters.

In addition to one or more aspects of the method or as an alternate, the first protocol is a CAN protocol.

In addition to one or more aspects of the method or as an alternate, the second protocol is a serial protocol.

In addition to one or more aspects of the method or as an alternate, the maintenance system is a cloud service.

The present disclosure is illustrated by way of example and not limited in the accompanying figures in which like reference numerals indicate similar elements.
FIG. 1 is a schematic illustration of a passenger conveyor system, and in particular an elevator system, that may employ various embodiments of the present disclosure;
FIG. 2 shows additional details of a system for monitoring a status of the operating system of the device controller and pushing updates as needed; and
FIG. 3 is flowchart showing a method of monitoring a status of the operating system of the device controller and pushing updates as needed.

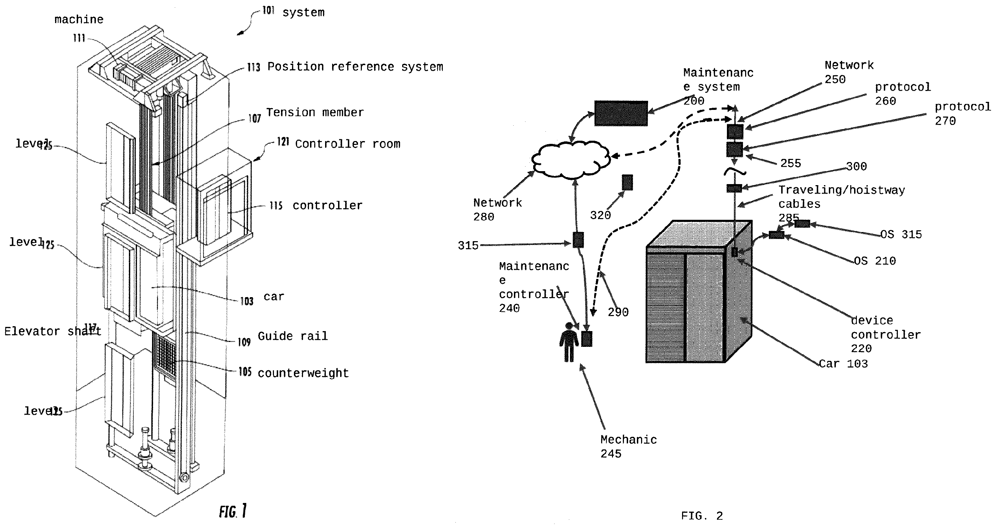

FIG. 1 is a perspective view of a passenger conveyor system, and in particular an elevator system 101 in a building, including an elevator car 103 (generally, a passenger conveyor), a counterweight 105, a tension member 107, a guide rail (or rail system) 109, a machine (or machine system) 111, a position reference system 113, and an electronic elevator controller (generally, a device controller) 115. The controller 115, may be directly connected to the car 103 or located separately in the building, or may be part of an elevator management system (EMS) in a control room in the building, as non-limiting examples. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

Though elevator systems are disclosed in depth herein as a nonlimiting example, the present disclosure is equally applicable to other forms of passenger conveyor systems. Passenger conveyor systems include moving walkways and escalators and other automated people movers as nonlimiting alternatives to elevator systems, all of which move people between and along different levels in a building.

Turning to FIG. 2, additional features of the elevator system 101 are shown. As shown in the figure, a maintenance system 200 is configured to confirm a status of an operating system 210 of a device controller 220 of the elevator car 103. A maintenance controller 240, separate from the maintenance system 200, which may be an electronic smart device in possession of the mechanic 245, is configured to communicate with the device controller 220 over a first network 250 utilizing a first protocol 260 and a second protocol 270 and to communicate with the maintenance system 200 over a second network 280.

The first network 250 may be a wired or wireless network utilizing, e.g., the traveling cable 285 in the hoistway. The first protocol 260 may be a CAN (controller area network) protocol. The second protocol 270 may be a legacy serial protocol. The maintenance system 200 may be a cloud service and the second network 280 may be a wide area network. It is to be appreciated that the embodiments are not limited to CAN and serial networks.

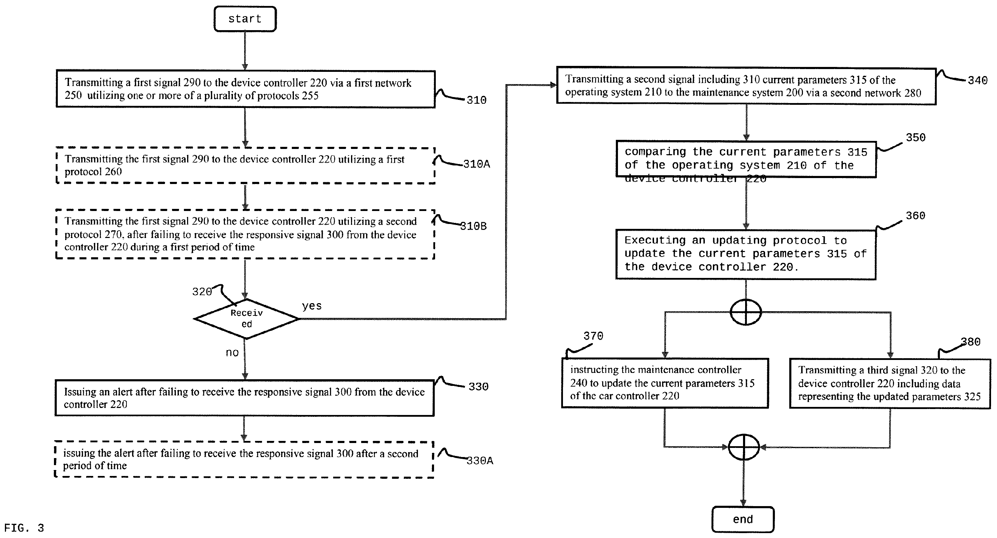

Turning to FIG. 3, a flowchart shows a method of monitoring a status of the operating system 210 of the device controller 220 and pushing updates as needed. As shown in block 310, the method includes transmitting, by the maintenance controller 240, a first signal 290 to the device controller 220 via a first network 250 utilizing one or more of a plurality of protocols 255 to identify the communication capabilities the device controller 220. More specifically, as shown in block 310A the method includes transmitting, by the maintenance controller 240, the first signal 290 to the device controller 220 utilizing a first protocol 260. As shown in block 310B the method includes transmitting, by the maintenance controller 240, the first signal 290 to the device controller 220 utilizing a second protocol 270, after failing to receive the responsive signal 300 from the device controller 220 during a first period of time. It is to be appreciated that boxes in dashed lines in the flow chart represent further explanations of preceding steps and are not intended on limiting the scope of the embodiments.

As shown in block 320, a determination, by the maintenance controller 240, is made of whether the responsive signal 315 was received from the device controller 220.

If a responsive signal is not received (No at 3320), as shown in block 330, the method includes issuing, by the maintenance controller 240, an alert to the maintenance system 200 after failing to receive the responsive signal 300 from the device controller 220. More specifically, as shown in block 330A, the method includes issuing, by the maintenance controller 240, the alert after failing to receive the responsive signal 300 after a second period of time.

If a responsive signal was received (Yes at 320), as shown in block 340 the method includes transmitting, by the maintenance controller 240, a second signal including 310 current parameters 315 of the operating system 210 to the maintenance system 200 via a second network 280. This transmission occurs after receiving a responsive signal 300 from the device controller 220 to determine the status of the operating system 210.

As shown in block 350, the method includes the maintenance system 200 comparing the current parameters 315 of the operating system 210 of the device controller 220 to determine whether the operating system 210 requires updating. As shown in block 360, the method includes executing, by the maintenance system 200, an updating protocol to update the current parameters 315 of the device controller 220 upon determining that the operating system 210 of the device controller 220 requires updating.

As shown in block 370, per the updating protocol, the method includes instructing the maintenance controller 240, by the maintenance system 200, to update the current parameters 315 of the device controller 220. As shown in block 380, per the updating protocol, the method includes transmitting, by the maintenance system 200, a third signal 320 to the device controller 220, e.g., over the first network 250 including data representing the updated parameters 325, and the device controller 220 thereafter installing the updated parameters 325.

Whether to use the solution identified in blocks 380 and 390 may depend on the technical robustness of the system. For example, the maintenance system may not be able to transmit updates over the network to which the controller is connected. Alternatively, the controller may be limited in its technical capabilities to obtaining updates only from the maintenance controller that is in the possession of the mechanic 245. Alternatively, the mechanic 245 may have a more recent update or an update that is modified on site for the unique needs of the particular device controller 220.

Thus, the disclosed system provides for determining, e.g., on bootup of a device controller, a configuration of the elevator device controller, such its communication protocol capabilities, its serial number, the operating system version, and other unique information, which is forward to a maintenance system, e.g., at a remote hub which may be a cloud service, to determine whether the controller requires updating. If updating is required, actions may be taken to ensure such updates. It is to be appreciated that this process may be performed at an initial installation of an elevator system as well as periodically.

Wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radiofrequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or complied, and may then be stitched together or maintained as separate packets of information.

Each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A passenger conveyor system for confirming a status of an operating system of a device controller that controls a passenger conveyor, comprising:
a maintenance system;
a maintenance controller coupled to the device controller via a first network and to the maintenance system via a second network, wherein the maintenance controller is configured to:
transmit a first signal to the device controller utilizing one or more of a plurality of protocols to identify the communication capabilities of the device controller;
transmit a second signal including current parameters of the operating system to the maintenance system, upon receiving a responsive signal from the device controller, to determine the status of an operating system; and
issue an alert to the maintenance system after failing to receive a responsive signal from the device controller.

2. The system of claim 1, wherein the maintenance controller is configured to:
transmit the first signal to the device controller utilizing a first protocol; and
transmit the first signal to the device controller utilizing a second protocol after failing to receive the responsive signal from the device controller during a first period of time.

3. The system of claim 1 or 2, wherein the maintenance controller is configured to issue the alert after failing to receive the responsive signal after a second period of time.

4. The system of any of claims 1 to 3, wherein the maintenance system is configured to compare the current parameters of the operating system of the device controller to determine whether the operating system requires updating.

5. The system of claim 4, wherein the maintenance system is configured to execute an updating protocol to update the current parameters of the device controller upon determining that the operating system of the device controller requires updating.

6. The system of claim 5, wherein the updating protocol includes the maintenance system instructing the maintenance controller to update the current parameters of the device controller.

7. The system of claim 6, wherein the updating protocol includes the maintenance system transmitting a third signal to the device controller including data representing updated parameters, and the device controller installing the updated parameters.

8. The system of claim 7, wherein the first protocol is a CAN protocol.

9. The system of claim 7 or 8, wherein the second protocol is a serial protocol.

10. The system of any of claims 1 to 9, wherein the maintenance system is a cloud service.

11. A method of confirming a status of an operating system of a device controller that controls a passenger conveyor, comprising:
transmitting, by a maintenance controller, a first signal to the device controller via a first network utilizing one or more of a plurality of protocols to identify the communication capabilities the device controller;
transmitting, by the maintenance controller, a second signal including current parameters of the operating system to a maintenance system via a second network after receiving a responsive signal from the device controller to determine the status of the operating system; and
issuing, by the maintenance controller, an alert to the maintenance system after failing to receive a responsive signal from the device controller.

12. The method of claim 11, comprising:
transmitting, by the maintenance controller, the first signal to the device controller utilizing a first protocol; and
transmitting, by the maintenance controller, the first signal to the device controller utilizing a second protocol, after failing to receive the responsive signal from the device controller during a first period of time; and/or
comprising issuing, by the maintenance controller, the alert after failing to receive the responsive signal after a second period of time.

13. The method of claim 11 or 12, comprising comparing, by the maintenance system, the current parameters of the operating system of the device controller to determine whether the operating system requires updating; and/or
comprising executing, by the maintenance system, an updating protocol to update the current parameters of the device controller upon determining that the operating system of the device controller requires updating.

14. The method of any of claims 11 to 13, wherein the updating protocol includes the maintenance system instructing the maintenance controller to update the current parameters of the device controller; and/or
wherein the updating protocol includes the maintenance system transmitting a third signal to the device controller including data representing updated parameters, and the device controller installing the updated parameters.

15. The method of any of claims 11 to 14, wherein the first protocol is a CAN protocol; and/or
wherein the second protocol is a serial protocol; and/or
wherein the maintenance system is a cloud service.
